# EUROPÄISCHE PATENTSCHRIFT

(11) **EP 2 967 756 B1**
(45) Veröffentlichungstag und Bekanntmachung des Hinweises auf die Patenterteilung: **12.06.2019**
(21) Anmeldenummer: 14708910.6
(22) Anmeldetag: 11.03.2014
(51) Int. Cl.: A61C 5/00, A61C 7/20, A61C 9/00

(54) **RETAINER SOWIE VERFAHREN ZU DESSEN HERSTELLUNG**
RETAINER AND METHOD FOR PRODUCTION THEREOF
ATTACHEMENT ORTHODONTIQUE ET SON PROCÉDÉ DE FABRICATION

(30) Priorität: 13.03.2013 DE 102013204359
(43) Veröffentlichungstag der Anmeldung: 20.01.2016
(73) Patentinhaber: RETAINTECHNOLOGY UG (HAFTUNGSBESCHRÄNKT), 50676 Köln (DE)
(72) Erfinder: SCHUMACHER, Hildegard Brigitte, 50996 Köln (DE)
(74) Vertreter: Pellengahr, Maximilian Rudolf
(86) Internationale Anmeldenummer: PCT/EP2014/054703
(87) Internationale Veröffentlichungsnummer: WO 2014/140013

(56) Entgegenhaltungen:
- CN-U- 203 226 911
- JP-A- 2002 177 299
- US-A- 4 516 938
- US-A1- 2004 072 120
- US-A1- 2004 083 611
- US-A1- 2005 181 332

## Beschreibung

### Einleitung

Die Erfindung betrifft einen mit einer Mehrzahl von Zähnen zusammenwirkenden Retainer, geeignet für die Stabilisierung der Zähne, umfassend mindestens einen lang gestreckten Bogen, wobei der Bogen global eine gekrümmte, einer natürlichen Krümmung eines Unterkiefers oder eines Oberkiefers folgende Form aufweist und lokal an eine Oberflächenkontur eines jeweilig anliegenden Zahns individuell angepasst ist, wobei der Retainer aus einem Metall besteht und aus einem zwei parallel zueinander angeordnete Oberflächen aufweisenden plattenförmigen Teil, insbesondere einem Blech, des Metalls herausgearbeitet ist.

Ferner betrifft die Erfindung ein Verfahren zur Herstellung eines vorgenannten Retainers, aufweisend die folgenden Verfahrensschritte:
a) Eine Kontur individuell zu stabilisierender Zähne wird erfasst.
b) Der Retainer wird aus einem Blech herausgearbeitet.

Unter der "Kontur" der Zähne wird dabei gewissermaßen deren Topografie verstanden. Das heißt, dass die Erfassung der Kontur der Zähne beinhaltet, diejenige Zahnoberfläche, die mit dem Retainer zusammenwirken soll, derart zu erfassen, dass dem behandelnden Arzt eine Information darüber vorliegt, welche Form der Retainer sowohl global als auch lokal möglichst aufweisen sollte, um möglichst passend an den Zähnen anliegen zu können.

### Stand der Technik

Retainer der eingangs beschriebenen Art sind bereits seit geraumer Zeit bekannt. Sie dienen grundsätzlich der Fixierung der Zahnstellung eines Patienten. Das heißt, dass mittels eines Retainers ein Status Quo im Hinblick auf die Stellung der Zähne fixiert wird, um möglichen Veränderungen der Zahnstellung über die Zeit vorzubeugen.

Besonders typisch ist der Einsatz von Retainern im Zuge einer Nachbehandlung einer kieferorthopädischen Behandlung. Letztere involviert eine aktive Beeinflussung der Zahnstellung eines Patienten, wobei mittels geeigneter Vorrichtungen Kräfte auf die Zähne ausgeübt werden, wodurch diese ihre Stellung beziehungsweise Ausrichtung über die Zeit verändern. Nachdem eine solche kieferorthopädische Behandlung abgeschlossen ist und der Einsatz der jeweiligen Vorrichtung beendet wird, sind die Zähne bestrebt, in deren vormalige Position zurückzukehren. Wird keine Nachbehandlung unternommen, wird sich das mittels der aktiven Behandlung erzielte Ergebnis zumindest teilweise zurückbilden und die aktive Behandlung folglich zunichte gemacht.

Daher wird im Anschluss an die aktive Behandlung typischerweise der Einsatz eines Retainers empfohlen, der die neu erwirkte Zahnstellung fixiert. Um dies zu erreichen, sind derartige Retainer mit einer Mehrzahl von Zähnen verbunden, wobei der Retainer geeignet ist, Kräfte infolge einer gewünschten Eigenbewegung eines Zahns aufzunehmen und auf die übrigen Zähne zu verteilen. Eine Bewegung des Zahns wird somit verhindert. Derartige Retainer sind beispielsweise aus der DE 20 2012 004 419 U1 sowie der DE 102 45 008 A1 bekannt, wobei in letzterer Schrift ein so genannter "2-Punkt-Retainer" beschrieben ist, der mit lediglich zwei Zähnen fest verbunden ist.

Bei den bekannten Retainern hat es sich als besonders nachteilig herausgestellt, dass eine präzise Anpassung des jeweiligen Retainers an die individuelle Kontur der zu fixierenden Zähne zum einen sehr aufwendig und zum anderen selbst bei sorgfältiger Bearbeitung durch einen erfahrenen Zahntechniker meist von nur geringer Präzision gekennzeichnet ist. Dies ist vor allem auf die Herstellung heute bekannter Retainer zurückzuführen, welche in einem händischen Verfahren durch Biegung eines Ausgangsmaterials - typischerweise einer Metalllitze - an die Form eines jeweiligen Zahnabdrucks angepasst werden. Der Präzision einer solchen Bearbeitung sind naturgemäß Grenzen gesetzt, wobei der fertige Retainer einen Abstand zu einem zu fixierenden Zahn in der Größenordnung weniger Millimeter aufweisen kann. Um diese "Lücke" zwischen Retainer und Zahn zu schließen, ist es dann notwendig, eine entsprechend größere Klebestelle vorzusehen, die den Retainer trotz dessen großen Abstandes zum Zahn zuverlässig einfasst und folglich kraftschlüssig mit dem Zahn verbindet. Dies ist sowohl dem Tragekomfort des Retainers als auch dessen Dauerhaftigkeit abträglich, da beim Kauen auftretende Scherkräfte, die auf den Retainer beziehungsweise dessen Verklebung wirken, umso größer ausfallen, desto mehr "Angriffsfläche" sie in der Mundhöhle bieten. Das führt häufig dazu, dass ein Retainer sich lokal ablöst und anschließend händisch wieder fixiert werden muss. Ebenso kommt es regelmäßig zu einem Bruch des Retainers.

Ferner weisen die bekannten Retainer den Nachteil auf, dass deren rein passive Wirkung bereits durch geringfügige versehentliche Verbiegungen des Retainers "aktiviert" werden können. Somit kommt es regelmäßig vor, dass ein Retainer in einem Zahnzwischenbereich, in dem er frei, das heißt unverklebt, von einem Zahn zu dem jeweils benachbarten Zahn verläuft, versehentlich verbogen wird, beispielsweise infolge einer einwirkenden Kaukraft.

Durch die Verbiegung wird die projizierte Länge des Retainers lokal reduziert, was dazu führt, dass der Retainer fortan die benachbarten Zähne aufeinander zu zieht. Das heißt, dass der Retainer mittels der ungewollten Verformung von einem passiven zu einem aktiven Element verändert wird, welches nun nicht länger rein fixierend wirkt, sondern aktiv auf die Zahnstellung Einfluss nimmt. Ein solcher Einfluss ist jedoch unbedingt zu vermeiden, da die aktive Zahnbehandlung zum Zeitpunkt des Retainereinsatzes typischerweise bereits abgeschlossen ist und weitere Zahnbewegungen nicht erwünscht sind. Tritt eine Verformung eines Retainers auf, kann es sogar notwendig werden, diesen vollständig auszuwechseln.

Ein weiterer Nachteil heutiger Retainer besteht in deren Fixierwirkung, die als "Verblockung" bezeichnet werden kann. Unter dieser Verblockung ist zu verstehen, dass ein gemäß dem Stand der Technik bekannter Retainer zwar den gewünschten Stabilisierungseffekt erzielt, dabei die Zähne jedoch so stark aneinander koppelt, dass jegliche Belastung, die lokal auf einen Zahn wirkt, im Wesentlichen gleichmäßig auf alle Zähne verteilt wird. Eine unabhängige Bewegung in eine sagittale Richtung ist wegen des Retainers weitestgehend unterbunden. Dasselbe gilt für vertikale Bewegungen sowie Verdrehungen der Zähne um deren Hochachse. Dadurch bedingt nimmt die Krafteinwirkung infolge äußerer Kräfte für jeden einzelnen Zahn dauerhaft ab, was zur Folge hat, dass der Alveolarknochen, in dem die Zähne mit ihrer Wurzel verankert sind, deutlich weniger gereizt wird, als dies ohne den Retainer, also unter "natürlichen Bedingungen" der Fall ist. Diese Reizung ist allerdings besonders wichtig, da sie zu einer Stimulation des Knochengewebes führt, wodurch dieses erhalten bleibt. Nimmt die Reizung des Knochengewebes ab, bildet es sich zurück. Die sinkende Krafteinwirkung auf jeden einzelnen Zahn hat demgemäß zur Folge, dass der Alveolarknochen sich im Bereich der "verblockten" Zähne zurückbildet, da die Einwirkung äußerer Kräfte auf das Knochengewebe lokal abnimmt.

Aus dem zuvor Gesagten wird deutlich, dass zwei Arten von Zahnbewegungen unterschieden werden müssen: Zum einen treten Zahnwanderungen auf, die eine kontinuierliche Bewegung des Zahns zurück in eine Fehlstellung bedeuten, wobei diese Zahnwanderungen gerade durch den Retainer unterbunden werden sollen. Zum anderen verfügen Zähne aber auch über eine gewisse Eigenbeweglichkeit, aufgrund der die Zähne insbesondere bei Kaubelastungen in einem gewissen Spielraum (ca. 0,2 mm) in alle Richtungen beweglich sind, wobei die Zähne nach Abklingen der Belastung wieder in ihre Ausgangsstellung zurückkehren. Diese Eigenbewegungen sind aufgrund der damit verbundenen Reizung des Knochengewebes jedoch äußerst wichtig und sollten von einem Retainer so wenig wie möglich eingeschränkt werden.

Aus der EP 1 782 748 A1 ist ein Retainer bekannt, der aus einem Zirkonoxid, also einem Keramikwerkstoff, besteht. Aufgrund der Tatsache, dass das Zirkonoxid nicht verformbar ist, wird der Retainer aus einem Block herausgefräst oder herausgeschliffen. Zirkonoxid zeichnet sich durch eine hohe Biegefestigkeit aus, ist demnach sehr starr und unnachgiebig. Aufgrund der dem spröden Keramikmaterial inhärenten Bruchgefahr ist der bekannte Retainer sehr dickwandig und voluminös. Diese Eigenschaften führen jedoch bei den bekannten Retainern gerade zu dem zuvor beschriebenen Nachteil der "Verblockung", durch die die Bewegungen der Zähne in der Alveole (Zahnfach) eingeschränkt und unphysiologisch werden, was schließlich zu einer Rückbildung des Knochengewebes führt.

### Aufgabe

Der vorliegenden Erfindung liegt die Aufgabe zugrunde, die Nachteile der bekannten Retainer zu überwinden.

### Lösung

In Bezug auf den eingangs beschriebenen Retainer wird die vorgenannte Aufgabe erfindungsgemäß durch einen Retainer nach Anspruch 1 gelöst. Nickel-Titan-Legierungen sowie Nitinol sind Formgedächtnismaterialien, die für den erfindungsgemäßen Retainer besonders gut geeignet sind, da sie ein so genanntes "pseudoelastisches" Materialverhalten aufweisen (auch "Superelastizität" genannt). Dieses Materialverhalten bedeutet im Hinblick auf die vorliegende Erfindung, dass der Retainer selbst verhältnismäßig große Auslenkungen erfahren kann, ohne dadurch plastisch - also bleibend - verformt zu werden. Der elastische Bereich des Formgedächtnismaterials ist aufgrund einer Phasenumwandlung innerhalb des Werkstoffs unter Spannungseinwirkung bedingt ungewöhnlich groß ausgebildet und kann den elastischen Bereich eines "normalen" Stahls, wie er heute üblicherweise für Retainer eingesetzt wird, bis um das Zwanzigfache übersteigen. Dies führt zu dem besonderen Vorteil, dass ein solcher erfindungsgemäßer Retainer praktisch nicht plastisch verformt werden kann, was bedeutet, dass ein "Knick" oder eine sonstige versehentliche permanente Verformung des Retainers nicht möglich ist. Mithin ist es nicht möglich, dass der erfindungsgemäße Retainer versehentlich aufgrund einer lokalen Auslenkung eines einzelnen Zahns infolge seiner Eigenbeweglichkeit (beispielsweise unter Einwirkung hoher lokaler Kaukräfte bedingt z.B. durch ein Beißen auf ein Korn) zu "aktivieren". Demzufolge ist eine durch den Retainer bedingte Bewegung der Zähne vergleichbar zu einer kieferorthopädischen Behandlung bei Verwendung des erfindungsgemäßen Retainers ausgeschlossen.

Ferner ist das Formgedächtnismaterial im Hinblick auf die oben beschriebene Problematik der mangelnden Reizung des Alveolarknochens vorteilhaft. Dies liegt darin begründet, dass kurzweilige Positionsänderungen der Zähne, die auf lokale Krafteinwirkungen auf einzelne Zähne zurückzuführen sind - also im Rahmen ihrer Eigenbeweglichkeit -, aufgrund der Pseudoelastizität des Materials, das heißt äußerst geringe elastische Rückstellkräfte, ermöglicht werden. Durch eine reversible, elastische Deformation des Retainers wird der einwirkenden Kraft nachgegeben und der Zahn kann in natürlichem Ausmaß in der Alveole, das heißt dem Zahnfach, in dem der Zahn durch kollagene Fasern aufgehängt ist, ausgelenkt werden. Sobald die Krafteinwirkung nicht mehr besteht, nehmen sowohl der Retainer als auch der betroffene Zahn wieder seine ursprüngliche Form bzw. Position an.

Die Pseudoelastizität des Formgedächtnismaterials begünstigt überdies die Dauerhaftigkeit des erfindungsgemäßen Retainers. Somit unterliegt er nicht der Gefahr eines verformungsbedingten Bruchs oder einer "Ermüdung" der Rückstelleigenschaften.

Außerdem ist das Formgedächtnismaterial aufgrund des niedrigen Elastizitätsmoduls vergleichsweise weich, wodurch bedingt es sich leichter elastisch verformen lässt. Ein Abbruch einer Verbindungsstelle zu einem Zahn ist damit weniger wahrscheinlich als bei Retainern nach dem Stand der Technik. Des Weiteren ist die geringe Steifigkeit im Hinblick auf die sagittale sowie vertikale Verformungsmöglichkeit der einzelnen Zähne positiv, da der Retainer die verbundenen Zähne weniger steif koppelt beziehungsweise verblockt. Demzufolge ist ein von einem Formgedächtnismaterial gebildeter Retainer im Hinblick auf eine geringere Verblockungswirkung ebenso zu bevorzugen.

Durch den Einsatz von Nickel-Titan-Legierungen, insbesondere Nitinol, wird ein bisher bestehender Interessenskonflikt bei der Verwendung und Ausbildung von Retainern gelöst: Einerseits ist man bestrebt, die Zähne in Kraft übertragender Weise miteinander zu verbinden, um ungewünschten Zahnbewegungen bzw. Zahnwanderungen entgegen zu wirken. Andererseits soll die physiologische Eigenbeweglichkeit der einzelnen Zähne so wenig wie möglich eingeschränkt werden. Beides ist mit dem erfindungsgemäßen Verfahren beziehungsweise mit dem erfindungsgemäßen Retainer möglich, nicht jedoch mit den bisher bekannten Retainern. Dies ist deshalb der Fall, da Nickel-Titan-Legierungen, insbesondere Nitinol, sich dadurch auszeichnen, dass bei schnell auftretender Belastung eine (elastische) Verformung stattfinden kann und bei langsam auftretender Belastung keine Verformung des Retainers hervorgerufen wird. Dies ist besonders von Vorteil, da bei Kaubewegungen gerade die gewünschten kurz auftretenden Bewegungen der Zähne im Rahmen ihrer Eigenbeweglichkeit gestattet werden, während kontinuierliche Bewegungen beziehungsweise Zahnwanderungen der Zähne in Richtung einer Fehlstellung gerade unterbunden werden. Auch wenn Auslenkungen zugelassen werden, ist stets eine geringe Rückstellkraft in die Ausgangsstellung des Retainers vorhanden. Zwar hat beispielsweise Stahl auch eine gewisse Rückstellkraft, jedoch ist diese deutlich geringer und es besteht eine hohe Wahrscheinlichkeit, dass sich der Stahl dauerhaft verbiegt und somit überhaupt gar keine Rückstellkraft mehr ausübt sondern im Gegenteil eine Kraft auf die Zähne ausübt, die sie in eine Fehlstellung lenkt.

Bezüglich des Merkmals des erfindungsgemäßen Retainers, dass eine Ausarbeitungsoberfläche des Retainers in dessen eingebautem Zustand einer Zahnoberfläche, an der der Retainer anliegt, zugewandt ist, und eine Oberseite oder eine Unterseite des Retainers der ursprünglichen Blechebene entspricht, ist von Vorteil, da auf diese Weise ein biegefreies Heraustrennen des Retainers möglich ist beziehungsweise erfolgt. Das bedeutet, dass der Retainer in der Form hergestellt wird, in der er schließlich an die Zähne eines Patienten angelegt wird. Ein Verbiegen des Blechs zur Herstellung des Retainers ist bei einem Werkstoff mit superelastischen Eigenschaften auch gar nicht möglich, da gerade keine bleibenden Verformungen vorgenommen werden können. Bei dem erfindungsgemäßen Retainer handelt es sich somit um ein Endprodukt, das ohne weitere Bearbeitung eingesetzt werden kann. Die vorteilhafte Endbehandlung in Form einer Elektropolitur sei an dieser Stelle nicht berücksichtigt.

Bei einem erfindungsgemäßen Retainer, der abschnittsweise in Verbindungsabschnitten mittels eines Verbindungsmaterials mit den jeweilig anliegenden Zähnen in Kraft übertragender Weise verbunden ist, vorzugsweise in ein an dem jeweiligen Zahn haftendes Verbindungsmaterial eingebettet ist, ist es ferner besonders von Vorteil, wenn in jedem der Verbindungsabschnitte ein maximaler Abstand zwischen einer jeweiligen Zahnoberfläche und einer Stelle des Retainers, die senkrecht zu der jeweiligen Zahnoberfläche gemessen den geringsten Abstand zu ebendieser Zahnoberfläche aufweist, maximal 0,1 mm, vorzugsweise maximal 0,01 mm, weiter vorzugsweise maximal 0,005 mm, beträgt. Ein solcher Retainer ist der natürlichen Kontur der jeweiligen Zähne besonders genau angepasst. Dies ist insofern vorteilhaft, als ein Einsetzen eines solchen Retainers für den behandelnden Fachmann besonders einfach ist, da sich der Retainer praktisch nur in einer einzigen Position exakt an die Zähne anlegt. Ein versehentlich "schiefer" Einbau ist mithin fast ausgeschlossen. Ferner begünstigt die genaue Anpassung gemäß vorstehender Erläuterung die Verwendung dünn ausgeführter Verbindungsabschnitte, was sich wiederum positiv auf die Dauerhaftigkeit und Fehleranfälligkeit des Retainers auswirkt. Eine dünne Schicht des Verbindungsmaterials wird darüber hinaus auch als weniger störend von Seiten des Patienten empfunden.

Vorteilhafterweise ist der Retainer lokal derart ausgeformt, dass er in mindestens einen zwischen zwei benachbarten Zähnen befindlichen Zahnzwischenraum zumindest teilweise hineinragt, so dass eine in Längsrichtung des Retainers gerichtete Relativbewegung zwischen dem Retainer und den Zähnen selbst dann blockiert ist, wenn der Retainer in einem unverbundenen Zustand an den Zähnen anliegt.

"Unverbundener Zustand" bedeutet hier, dass der Retainer noch nicht in Kraft übertragender Weise mit den Zähnen verbunden ist, demzufolge also beispielsweise von Hand wieder aus der Mundhöhle entnommen werden könnte. In einem gegenteiligen "verbundenen Zustand" ist der Retainer hingegen fest mit den Zähnen verbunden, insbesondere verklebt. Die beschriebene Formgebung des Retainers ist ausschließlich mittels des erfindungsgemäßen Verfahrens möglich. Eine Ausformung von Bereichen, die in die Zahnzwischenräume hinein ragen, ist mittels der nach dem Stand der Technik üblichen Verformungsmethoden undenkbar.

Die Ausformung des Retainers in der beschriebenen Weise bietet eine Reihe von Vorteilen. Hierzu wird auf das oben beschriebene Problem der "Verblockung" Bezug genommen. Diese entsteht dadurch, dass heute übliche Retainer die Zähne sehr stark aneinander koppeln, so dass eine unabhängige Eigenbewegung der Zähne stark eingeschränkt wird. Die damit einhergehende Problematik der Zurückbildung des Alveolarknochens ist vorstehend bereits beschrieben. Durch die Führung des Retainers bis in die Zahnzwischenräume wird nun der Effekt erzielt, dass die so genannte "freie Länge", das heißt die Länge, über die der Retainer zwischen zwei benachbarten Zähnen frei, das heißt "unverklebt", an den Zähnen anliegt, bei dem erfindungsgemäßen Retainer erheblich länger ist, als bei bekannten Retainern. Bei letzteren verläuft der Retainer zwischen zwei benachbarten Verbindungsstellen im Wesentlichen geradlinig, also auf dem kürzest möglichen Weg. Bei dem erfindungsgemäßen Retainer hingegen wird gewissermaßen ein "Umweg" eingeschlagen, indem der Retainer bis in die Zahnzwischenräume geführt wird. Dies hat zur Folge, dass eine "verbaute Länge" des erfindungsgemäßen Retainers, das heißt eine abgewickelte Länge desselben, deutlich länger ist, als die abgewickelte Länge eines herkömmlichen Retainers. Hier kommt wieder das pseudoelastische Verhalten der Nickel-Titan-Legierung beziehungsweise des Nitinols zum Tragen, denn nur, wenn man ein pseudoelastisches Material verwendet, kann durch eine Verlängerung der an sich kurzen Strecke zwischen zwei Zähnen auch eine merkliche Erhöhung des Deflektionsvermögens erzielt werden. Durch die vergrößerte Länge zwischen zwei Klebestellen wird also die Flexibilität des Retainers weiter erhöht. Wird hingegen ein starres Material wie z.B. Keramik für einen Retainer verwendet, kann dieser zwar ebenfalls so ausgebildet sein, dass er zwischen Zahnzwischenräume benachbarter Zähne hineinragt, jedoch wird hierdurch die Flexibilität beziehungsweise Elastizität des Retainers nicht erhöht, vielmehr werden aufgrund der Starrheit des Keramiks weiterhinn keine ausreichenden Eigenbewegungen der Zähne ermöglicht.

Die vergrößerte freie Länge zwischen zwei Verbindungsstellen hat schließlich den vorteilhaften Effekt, die beschriebenen Verblockung der Zähne im Vergleich zum Stand der Technik zu reduzieren. Das hängt damit zusammen, dass die Kopplung eines jeweiligen Zahns an den jeweils benachbarten Zahn umso geringer ist, desto länger das Verbindungsstück ist, welches beide Zähne aneinander koppelt. Diese größere Bewegungsfreiheit äußert sich in der Praxis darin, dass die einzelnen Zähne sich bei Verwendung des erfindungsgemäßen Retainers deutlich freier sowohl in sagittaler als auch in transversaler und vertikaler Richtung bewegen können, als bei der Verwendung eines herkömmlichen Retainers. Außerdem wird dem Zahn eine Rotation und Veränderung in der Achsneigung ermöglicht. Die bisher zu beklagende mangelnde Reizung des Alveolarknochens entfällt somit weitestgehend. Gleichwohl ist die Kopplungswirkung der Zähne in transversale Richtung, das heißt die Kopplung, die grundsätzlich mittels des Retainers erreicht werden soll, nicht durch die größere freie Länge des erfindungsgemäßen Retainers negativ beeinflusst.

Die größere freie Länge bei dem erfindungsgemäßen Retainer ist ferner positiv für dessen Dauerhaftigkeit. Somit kommt es bei dem erfindungsgemäßen Retainer vergleichsweise selten zu Brüchen des Bogens oder der jeweiligen Verbindungsstelle. Dies liegt darin begründet, dass sich der Bogen leichter frei verformen kann, als bei den Retainern gemäß dem Stand der Technik. Bei letzteren müssen Verformungen über die kurzen Wegstrecken abgebaut werden, wobei die Auslenkungen mitunter zu einem Bruch des Retainers oder zu einem Bruch der benachbarten Verbindungsstelle führen.

Des Weiteren ist die hohe Passgenauigkeit, die sich hier durch die Anpassung des Retainers bis in die Zahnzwischenräume ausdrückt, grundsätzlich positiv für den Tragekomfort des Retainers. Hierzu wird auf obige Ausführungen verwiesen.

In einer vorteilhaften Ausgestaltung des Retainers weist der Bogen lokal einen Krümmungsradius von 1,0 mm oder weniger, vorzugsweise 0,5 mm oder weniger, weiter vorzugsweise 0,2 mm oder weniger, auf. Ein solch kleiner Krümmungsradius liegt beispielsweise im Bereich eines Zahnzwischenraumes vor. An einer solchen Stelle läuft der Bogen des Retainers lokal quasi zu einer "Spitze" zu. Ferner können derartig "scharfe" Krümmungen in dem Bogen geeignet sein, lokal an den Zahnoberflächen vorliegende Topografien nachzubilden. Eine Ausbildung derartiger Biegeradien ist bei herkömmlichen Retainern nicht denkbar.

Der erfindungsgemäße Retainer ist dann besonders von Vorteil, wenn der Bogen einen parallelogrammförmigen, vorzugsweise einen rechteckigen, Querschnitt aufweist, wobei Kantenlängen des Querschnitts maximal 0,7 mm, vorzugsweise maximal 0,5 mm, weiter vorzugsweise maximal 0,3 mm, betragen. Ein quadratischer Querschnitt ist besonders geeignet. Eine "eckige" Ausbildung des Retainers bietet in erster Linie den Vorteil einer so genannten "Torquekontrolle", das heißt der Stabilisierung der Inklination beziehungsweise der Achsneigung der Zähne. Dies liegt darin begründet, dass der eckige Retainer gut mit dem Verbindungsmaterial der Verbindungsstelle "verkanten" kann und diesen folglich an der jeweiligen Drehbewegung hindert. Übliche Retainer weisen hingegen einen runden oder ovalen Querschnitt auf, mittels deren eine solche Stabilisierung aufgrund mangelnder Verkantung des Retainerquerschnitts mit der jeweiligen Klebestelle nicht gegeben ist.

Die geringe Querschnittsgröße des erfindungsgemäßen Retainers führt darüber hinaus dazu, dass die Verbindungsstellen zur Zahnoberfläche vergleichsweise flach ausfallen können. Dies begünstigt zum einen die Dauerhaftigkeit des Retainers, da eine Angriffsfläche für Scherkräfte gering gehalten wird und zum anderen den Tragekomfort, da der Patient lediglich eine geringe Unebenheit auf den Zahnoberflächen spürt.

Vorzugsweise wird der erfindungsgemäße Retainer als so genannter "6-Punkt-Retainer" eingesetzt und ist als solcher mit mehr als zwei Zähnen bzw. mehr als drei Zähnen in Kraft übertragender Weise verbunden. Gleichwohl ist ein Einsatz als so genannter "2-Punkt-Retainer" grundsätzlich denkbar.

Im Hinblick auf die Verbindung des Retainers mit den Zähnen ist es besonders von Vorteil, wenn der Retainer an den Verbindungsabschnitten vollständig von dem Verbindungsmaterial umhüllt ist. Dies bedeutet, dass der Retainer an den Verbindungsabschnitten an vier Seiten von dem Verbindungsmaterial umgeben ist. Somit befindet sich der Retainer zumindest abschnittsweise vollkommen innerhalb der Kunststoffmasse, so dass in dem betreffenden Abschnitt kein Teil des Retainers frei liegt beziehungsweise sichtbar ist. Auf diese Weise wird eine besonders dauerhafte Verbindung von Retainer und Zahn geschaffen.

In einer besonders vorteilhaften Ausgestaltung ist der Retainer ferner einstückig ausgeführt. Dies ist unter Verwendung des erfindungsgemäßen Verfahrens der Normalfall, da im Zuge des Herausarbeitens des Retainers aus dem Blech ein einziges zusammenhängendes Stück entsteht, welches den kompletten Retainer bildet. Nichts desto weniger ist es denkbar, den erfindungsgemäßen Retainer aus einer Mehrzahl von Einzelteilen zusammenzufügen.

Fasst man den erfindungsgemäßen Retainer in dessen Draufsicht betrachtet als von einer fiktiven inneren Hüllparabel sowie einer fiktiven äußeren Hüllparabel eingefasst auf, wobei die innere Hüllparabel an denen am weitesten innen liegenden Stellen des Retainers anliegt und die äußere Hüllparabel an den am weitesten außen liegenden Stellen des Retainers anliegt, dann ist ein solcher Retainer vorzuziehen, bei dem lokal im Bereich eines Zahnzwischenraums ein maximaler, senkrecht zu der inneren Hüllparabel gemessener Abstand zwischen der inneren Hüllparabel und der äußeren Hüllparabel mindestens 1,0 mm, vorzugsweise 1,5 mm, weiter vorzugsweise 2,0 mm, beträgt. Dieser Abstand zwischen den Hüllparabeln ist als Maß für die "Eindringtiefe" des Retainers in die Zahnzwischenräume auffassbar. Umso weiter der Retainer diesen Zwischenräumen folgt, desto passgenauer sitzt er an den Zähnen an und desto länger ist die freie Länge zwischen benachbarten Verbindungsstellen. Insoweit ist ein Retainer mit den beschriebenen Abständen besonders von Vorteil.

Ferner kann es sich vorteilhaft auswirken, wenn der Retainer zumindest teilweise eine aufgeraute Oberfläche aufweist, wobei vorzugsweise sämtliche Oberflächen (Unterseite, Oberseite, Vorderseite, Rückseite) des Retainers aufgeraut ist. Eine solche Aufrauung ermöglicht einen besseren Verbund zwischen dem Retainer und dem Werkstoff, mittels dessen der Retainer mit den Zähnen verbunden wird.

In einer vorteilhaften Ausgestaltung ist der Retainer mittels einer Elektropolitur oder einer Plasmapolitur behandelt. Die Vorteile eines solchen Retainers sind vorstehend bereits erläutert.

Schließlich ist es besonders von Vorteil, wenn die Nickel-Titan-Legierung eine AF-Temperatur zwischen 25°C und 35°C, vorzugsweise zwischen 27°C und 33°C, weiter vorzugsweise zwischen 29°C und 31°C, aufweist. Es hat sich gezeigt, dass, je näher die AF-Temperatur bei der Temperatur liegt, bei welcher das Werkstück zum Einsatz kommt, welche im Fall von Retainern der Körpertemperatur von etwa 37° C entspricht, desto zuverlässiger wird bei der Dehnung des Werkstoffs der gewünschte Bereich des spannungsinduzierten Martensitplateaus erreicht.

Die zugrunde liegende Aufgabe wird ausgehend von einem Verfahren der eingangs beschriebenen Art erfindungsgemäß durch die folgenden Verfahrensschritte gelöst:
c) Die erfasste Kontur der Zähne wird in ein vorzugsweise digitales Modell überführt und der Retainer anhand des Modells entworfen.
d) Der entworfene Retainer wird auf Basis des Models mittels eines computergesteuerten Verfahrens aus dem Blech, das aus einer Nickel-Titan-Legierung, vorzugsweise aus Nitinol besteht, herausgearbeitet, wobei eine Ausarbeitungsoberfläche des Retainers in dessen eingebauten Zustand einer Zahnoberfläche, an der der Retainer anliegt, zugewandt ist und eine Oberseite oder eine Unterseite des Retainers einer ursprünglichen Blechebene entspricht.

Der Erfindung liegt die Idee zugrunde, dass eine Verbesserung der Präzision in der Anpassung des Retainers an die jeweiligen Zahnkonturen des Patienten zu einer erheblichen Verbesserung sowohl der Wirkung des Retainers als auch des Tragekomforts führt. Ferner können versehentliche Behandlungsfehler, die auf einer versehentlichen Aktivierung eines Retainers basieren, vermieden werden.

Das erfindungsgemäße Verfahren ermöglicht eine erhebliche Steigerung in der Präzision des gefertigten Retainers gegenüber heute bekannten Retainern in der Form, dass lokal ein Abstand des Retainers von der jeweiligen Zahnoberfläche, an der er anliegen soll, sehr gering ist. Aus der erfassten Kontur ist mittels des Einsatzes eines Computers mit einer entsprechenden CAD-Software (*computer aided design*) ein besonders präzises Modell für einen Retainer anfertigbar. Aus diesem Modell kann schließlich mittels eines computergesteuerten Bearbeitungsverfahrens (*computer aided manufacturing* - CAM) automatisiert der Retainer aus dem Blech in genau der Form herausgearbeitet werden, die das CAD-Modell vorgibt. Diese Vorgehensweise wird daher auch als "CAD-CAM-Verfahren" bezeichnet. Dadurch, dass der erfindungsgemäße Retainer aus dem Blech herausgearbeitet wird, handelt es sich um ein so genanntes subtraktives Verfahren.

Im Ergebnis erzeugt das erfindungsgemäße Verfahren folglich einen Retainer, der sich exakt an die Kontur der erfassten Zähne anlegt und einen sicheren Sitz aufweist. Insbesondere ist eine nachträgliche Verformung beziehungsweise Bearbeitung des Retainers - sei diese maschinell oder händisch - nicht notwendig beziehungsweise bei einer Nickel-Titan-Legierung, insbesondere Nitinol, mit ihren pseudoelastischen Eigenschaften auch gar nicht möglich, da sich das Material nach einer aufgezwungenen Verformung wieder in seine Ausgangslage zurück begibt. Der erfindungsgemäße Retainer weist somit, sobald er aus dem Blech herausgearbeitet wurde, direkt seine schlussendliche Form auf (sowohl global als auch lokal), ohne dass weitere Anpassungen nötig beziehungsweise möglich sind. Dies führt zu mehreren Vorteilen:

Die Verbindungsstellen, an denen der Retainer mit dem jeweiligen Zahn verbunden wird, können deutlich flacher ausgeführt werden, als dies gemäß dem Stand der Technik der Fall ist. Das heißt, dass eine Schichtstärke des benötigten Kunststoffs, der die Verbindungsstelle bildet, geringer ausfällt. Dies ist darauf zurückzuführen, dass der Retainer sehr nah beziehungsweise direkt an der korrespondierenden Zahnoberfläche anliegt. Die Kunststoffschicht, mittels derer derartige Retainer typischerweise mit den Zähnen verbunden werden, bedarf entsprechend einer vergleichsweise geringen Ausdehnung in eine Richtung senkrecht zur Zahnoberfläche, um den Retainer vollständig einzufassen beziehungsweise einzubetten oder zu umhüllen. Eine Überbrückung von Freiräumen zwischen dem Retainer und dem Zahn, wie es nach dem Stand der Technik regelmäßig nötig ist, ist nicht notwendig. Eine "flache" Verbindungsstelle erhöht zum einen den Tragekomfort eines solchen Retainers erheblich. Dies betrifft in erster Linie ein angenehmeres Tragegefühl, da die räumliche Ausdehnung des Fremdkörpers, den der Retainer zusammen mit dem Verbindungsmaterial im Mund des Patienten letztendlich darstellt, sehr gering ist. Ferner erleichtert es dem Patienten die Mundhygiene. Zum anderen führt eine dünne Verbindungsstelle dazu, dass selbige aufgrund ihrer geringen Ausdehnung innerhalb der Mundhöhle eine deutlich geringere Oberfläche aufweist, als dies bei Verbindungsstellen gemäß dem Stand der Technik üblich ist, und demzufolge deutlich geringeren Scherkräften beziehungsweise Kaukräften ausgesetzt ist. Letzteres ist für die Dauerhaftigkeit eines mittels des erfindungsgemäßen Verfahrens hergestellten Retainers besonders vorteilhaft, da die Wahrscheinlichkeit einer Ablösung des Retainers von einem oder mehreren Zähnen aufgrund solcher Krafteinwirkungen deutlich reduziert ist. Im Hinblick auf die Dauerhaftigkeit des Retainers ist ferner vorteilhaft, dass durch die Pseudoelastizität der Nickel-Titan-Legierung oder des Nitinols bei Krafteinwirkung durch Mastikation und dadurch bedingter Zahnauslenkung weniger Stress, also Spannung, im Retainer-Zahn-Verbund entsteht, der im schlimmsten Fall zu einen Stressbruch führen könnte.

Die mangelnde plastische Verformbarkeit eines von einem Formgedächtnismaterial gebildeten Retainers ist gleichzeitig der Grund, weshalb derartige Retainer bislang nicht auf dem Markt erhältlich sind. Somit sind die heute bekannten Herstellungsverfahren, die - wie beschrieben - ein individuelles Anformen des Retainers an die jeweilig zu fixierende Zahnreihe durch Biegung vorsehen, nicht geeignet beziehungsweise möglich, einen solchen Retainer aus einer Nickel-Titan-Legierung zu formen, da sich dieser nicht permanent beziehungsweise plastisch verformen lässt. Erst mittels des erfindungsgemäßen Verfahrens - nämlich durch Herausarbeiten des Retainers aus einem Blech unter Beachtung der angegebenen Ausrichtung - ist der Einsatz eines Formgedächtnismaterials überhaupt denkbar.

Ein weiterer wesentlicher Vorteil eines präzise ausgeformten Retainers liegt in dessen Einfachheit im Hinblick auf dessen Anwendung beziehungsweise Einsetzung bei einem Patienten. Bei Retainern gemäß dem Stand der Technik ist der behandelnde Arzt schnell dazu verleitet, Stellen des Retainers, an denen ein Abstand zwischen selbigem und dem zu fixierenden Zahn vergleichsweise groß ausfällt, manuell an den Zahn anzulegen und anschließend zu verkleben. Durch dieses Anlegen wird der Retainer elastisch verformt und entwickelt entsprechend eine Rückstellkraft, die ihn in seine vorherige Position zurückbewegen will. Durch die Fixierung des Retainers an dem Zahn wird diese Rückstellkraft konserviert und wirkt fortan auf den jeweiligen Zahn. Dies bedeutet, dass der Retainer nicht länger als rein passives Element wirkt, welches die Zähne in deren aktueller Position lediglich fixiert, sondern aktiviert wird und aufgrund der Krafteinwirkung eine Bewegung des jeweiligen Zahns hervorruft. Durch das erfindungsgemäße Herstellverfahren ist der Retainer hingegen derart präzise an die Zähne angepasst, dass eine solche versehentliche Aktivierung desselben kaum mehr möglich und insbesondere nicht nötig ist. Folglich ist durch das Verfahren der spätere Behandlungserfolg deutlich steigerbar und der Einsatz eines Retainers deutlich sicherer als nach dem Stand der Technik.

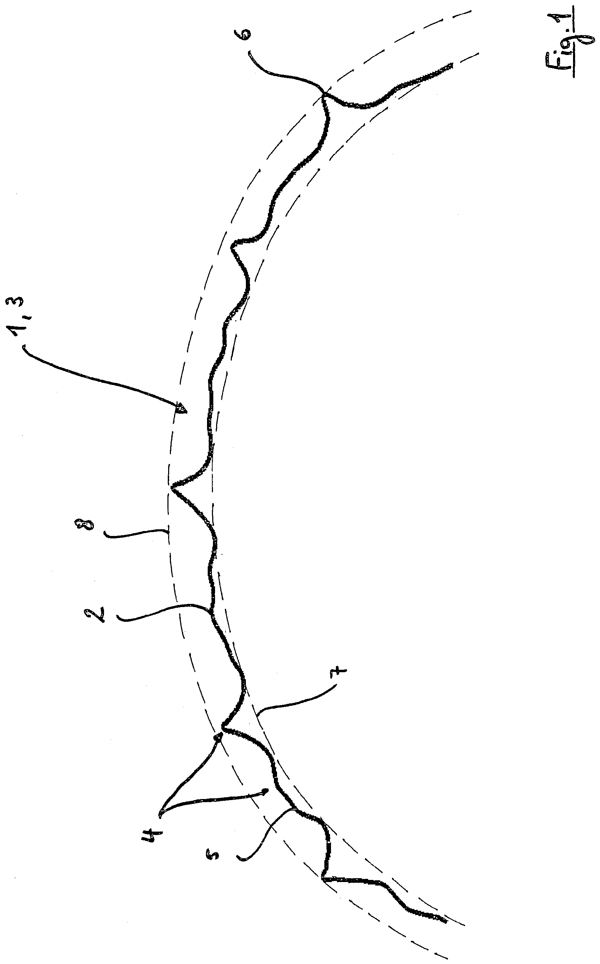

Der Retainer wird derart aus dem Blech herausgearbeitet, dass eine Ausarbeitungsoberfläche des Retainers in einem eingebautem Zustand desselben einer Zahnoberfläche, an der der Retainer anliegt und die entsprechend der jeweiligen Oberflächenkontur der betreffenden Zähne angepasst ist, zugewandt ist und eine Oberseite oder eine Unterseite des Retainers einer ursprünglichen Blechebene entspricht. Als "Oberseite" und "Unterseite" des Retainers werden die Flächen desselben verstanden, die jeweils parallel zueinander ausgerichtet sind. Am Beispiel der Figur 1 der Ausführungsbeispiele ist die Oberseite des Retainers die Fläche, die für den Betrachter der Figur sichtbar ist. Die "Ausarbeitungsoberfläche" bezeichnet die Oberfläche des Retainers, die durch das Herausarbeiten desselben aus dem Blech entsteht. Die Ausarbeitungsoberfläche ist folglich diejenige Ebene, die in Figur 1 der Ausführungsbeispiele senkrecht zur Zeichenebene angeordnet ist. Die Ausarbeitungsoberfläche liegt typischerweise an der Oberfläche der jeweilig zu fixierenden Zähne an. Zumindest liegt diese Ausarbeitungsoberfläche teilweise an der Zahnoberfläche an. Die gegenüberliegende, der Zahnoberfläche abgewandte Ebene, kann gleichermaßen als Ausarbeitungsoberfläche aufgefasst werden.

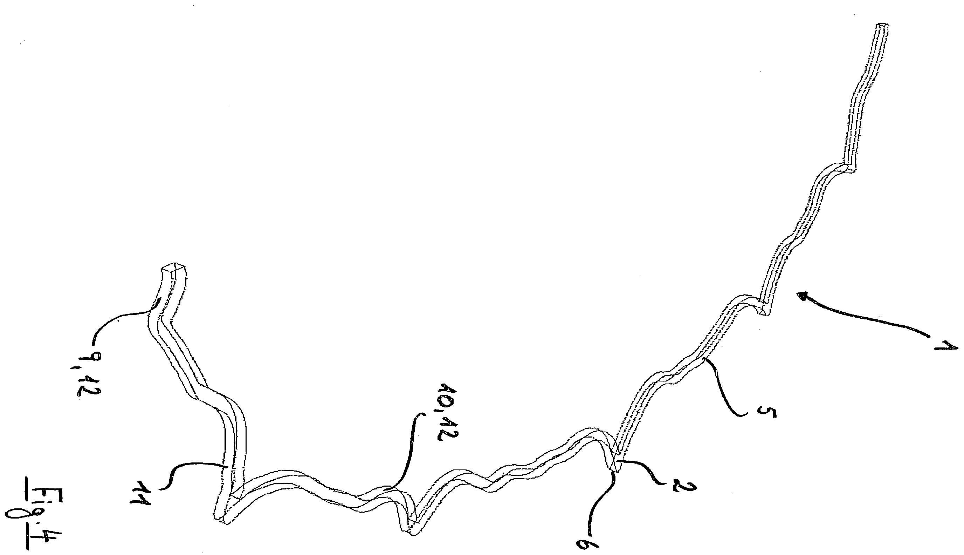

Diese Orientierung bei dem Herausarbeiten des Retainers aus dem Blech ermöglicht es, selbigen direkt in der Form herzustellen, in der er später an die Zähne des jeweiligen Patienten angelegt wird. Insbesondere ist der gekrümmte Verlauf, der global betrachtet in etwa parabelförmig ist, direkt automatisiert mit einem entsprechenden Werkzeug "abfahrbar", so dass die der Retainer ohne Biegung oder Verformung des Materials herausgetrennt wird. Zwar ist der vorstehend bereits genannten DE 102 45 008 A1 grundsätzlich auch ein Verfahren zum Herausarbeiten eines Retainers aus einem Blech entnehmbar, wobei auf das Ausführungsbeispiel gemäß Figur 4 der besagten Schrift verwiesen wird. Allerdings fällt bei dem dortigen Retainer die Ausarbeitungsoberfläche oder auch Bearbeitungsebene genannt mit der Oberseite beziehungsweise der Unterseite des Retainers zusammen. Der herausgearbeitete Retainer ist mithin im Ergebnis "flach" (was aufgrund der deutlich vergrößerten Klebe-Endabschnitte so erforderlich ist) und muss in einem weiteren Schritt an die Zähne angeformt werden, wobei er typischerweise gebogen wird. Ein solcher zusätzlicher Schritt, der typischerweise manuell erfolgt, birgt wiederum die Gefahr von Ungenauigkeit bezüglich der Passform des Retainers und ist mittels des erfindungsgemäßen Verfahrens gerade nicht notwendig, aufgrund der Eigenschaften der Nickel-Titan-Legierung aber auch gar nicht möglich.

Das erfindungsgemäße Verfahren ist dann besonders vorteilhaft, wenn der Retainer mittels Laserschneidens oder mittels Drahterosion aus dem Blech herausgeschnitten wird, wobei mit diesen Verfahren das Herausarbeiten über Hitzeinwirkung erfolgt und gerade nicht durch einen Abschervorgang zweier aneinander vorbei bewegender Schneiden. Derartige Schneidverfahren sind besonders präzise. Ferner sind zugehörige Vorrichtungen, die geeignet sind, automatisiert Bleche zu schneiden, gut verfügbar. Alternativ sind jedoch ebenso weitere Verfahren denkbar, beispielsweise Wasserstrahlschneiden.

Das Verfahren ist ferner dann besonders vorteilhaft, wenn die Kontur der zu stabilisierenden Zähne intraoral erfasst wird. Dies ist mittels so genannter "Intraoralscanner" möglich. Zwar sind übliche Abformverfahren, bei denen ein Abdruck (Negativ) der zu stabilisierenden Zähne mittels Abformmaterial angefertigt und durch Ausgießen des Abdrucks mit Gipsmaterial ein Positiv gewonnen wird, inzwischen von besonders hoher Qualität. Dennoch ist die Präzision eines intraoralen Scans verfahrensbedingt besser, da selbst bei der Verwendung guter Abformmaterialien stets eine trocknungsbedingte Schrumpfung stattfindet und beim Übertrag der Konturinformation von dem natürlichen Zahn auf die Abdrückschablone und wiederum von der Schablone auf die fertige Form zwangsläufig ein Verlust auftritt. Darüber hinaus treten regelmäßig Blasen durch Lufteinschlüsse bei der Abformung auf, was sich negativ auf die Präzision des Positivs auswirkt. Bei heute üblichen Retainern ist dies unerheblich, da deren Präzision derartig geringe Abweichungen zwischen dem Modell und dem echten Zahn nicht erfassen kann. Bei Retainern, die mittels des erfindungsgemäßen Verfahrens hergestellt werden, kann der direkt intraorale Scan hingegen einen Vorteil in dem Endergebnis des Retainers liefern.

In einer besonders vorteilhaften Ausgestaltung des erfindungsgemäßen Verfahrens ist das Blech, aus dem der Retainer herausgearbeitet wird, von einem vorgekrümmten Blech gebildet, wobei eine Krümmungsachse, um die das Blech mindestens gekrümmt ist, in einem ungekrümmten Zustand des Blechs in einer Blechebene verläuft. Ein vorgekrümmtes Blech bietet in der Herstellung die Möglichkeit, den Retainer gleichfalls gekrümmt herzustellen.

Bei einem planen Blech weist der erfindungsgemäß hergestellte Retainer eine Bogenform auf, wobei der Retainer allerdings zwei zueinander parallele Ebenen aufweist. Folglich würde der aus einem planen Blech herausgearbeitete Retainer flach auf eine ebene Oberfläche, beispielsweise eine Tischplatte, gelegt werden können, wobei eine Unterseite des Retainers einen vollflächigen Kontakt mit der Tischplatte ausbilden würde. Mittels der Verwendung vorgekrümmter Bleche, aus denen der Retainer herausgearbeitet wird, erhält der Retainer eine zusätzliche (vertikale) Dimension, da er folglich ebenso eine gekrümmte Geometrie aufweist. Am Beispiel der Tischplatte würde dies bedeuten, dass der Retainer lediglich stellenweise mit seiner Unterseite auf der planen Tischplatte aufliegen würde und im Übrigen von der Tischplatte abgehoben wäre. Eine solche Möglichkeit, den Retainer in einer zusätzlichen Dimension zu gestalten, ermöglicht gegebenenfalls eine bessere Anpassung des Retainers an die globale Form des Zahnbogens.

In einem besonders vorteilhaften Verfahren wird der Retainer, nachdem er aus dem Blech herausgearbeitet wurde, elektropoliert oder plasmapoliert, wodurch Kanten abgerundet werden. Eine solche Behandlung des Retainers reduziert die Mikrorauheit sowie die Nanorauheit von dessen Oberfläche und erschwert dadurch ein Anhaften potentiell schädlicher Keime. Ferner wird die Korrosionsbeständigkeit des Retainers gesteigert. Die nach dem Polieren neu entstandene Oberseite und Unterseite werden anmeldungsgemäß auch noch als entsprechend einer "ursprünglichen Blechebene" nach dem unabhängigen Verfahrensanspruch aufgefasst, da die Abtragung des Materials durch das Polieren nur gering ist, insbesondere da sich die Abtragung von Material im Mikrometerbereich bewegt.

### Ausführungsbeispiele

Die vorstehend beschriebene Erfindung wird nachfolgend anhand eines Ausführungsbeispiels, das in den Figuren dargestellt ist, näher erläutert.

Es zeigt:
- Fig. 1:: Eine Draufsicht eines erfindungsgemäßen Retainers für den Einsatz im Oberkiefer,
- Fig. 2:: wie Figur 1, jedoch eingesetzt an einem Modell des Oberkiefers,
- Fig. 3:: Eine Skizze eines eingesetzten Retaines an einem Modell eines Unterkiefers,
- Fig. 4:: wie Figur 1, jedoch als dreidimensionales Gittermodell
- Fig. 5:: einen Schnitt durch einen mit einem erfindungsgemäßen Retainer versehenen Zahn,
- Fig. 6:: eine vergrößerte Darstellung des Retainers aus Figur 5,
- Fig. 6a: eine vergrößerte Darstellung eines alternativ ausgebildeten Retainers und
- Fig. 7:: eine Draufsicht auf ein Nitinol-Blech mit ausgearbeitetem Retainer.

Ein erstes Ausführungsbeispiel, das in Figur 1 gezeigt ist, umfasst einen Retainer **1,** der für den Einsatz in einem Oberkiefer geeignet ist. Der Retainer **1** ist als 6-Punkt-Retainer ausgeführt und wird, nachdem dieser dem jeweiligen Patienten eingesetzt wurde, mit sechs Zähnen in Kraft übertragender Weise verbunden. Der Retainer **1** ist in Figur 1 in einer Draufsicht dargestellt, so dass eine Oberseite **2** des Retainers **1** sichtbar ist.

Der Retainer **1** besteht aus einem Bogen **3,** dessen globale Form parabelförmig ausgeführt ist. Diese globale Form des Bogens **3** ist von der Form des jeweiligen Oberkiefers, in den der Retainer **1** eingesetzt werden soll, vorgegeben. Lokal weist der Bogen **3** individuelle Ausformungen **4** auf, wobei diese in zwei Kategorien unterteilt werden können. Die erste Kategorie bezeichnet Ausformungen **4** in Form "flacher Wellen" **5,** die dazu geeignet sind, den Retainer **1** an eine individuelle Topografie der anliegenden Zähne anzupassen. Diese flachen Wellen **5** sind demzufolge entsprechend einer individuellen Zahnform eines Patienten angepasst. Die zweite Kategorie beschreibt "Spitzen" **6,** die die Stellen des Bogens **3** bilden, die in Zahnzwischenräume zwischen benachbarten Zähnen eintreten. In den Spitzen **6** weist der Bogen **3** geringe Krümmungsradien auf, die hier im Bereich von 0,5 mm bis 1,0 mm liegen. Diese Spitzen **6** unterscheiden sich von den Wellen **5** durch deren Amplitude relativ zu der globalen Form des Bogens **3** betrachtet.

Dies kann anhand zweier den Bogen **3** einfassenden Hüllparabeln **7, 8** nachvollzogen werden, die in Figur 1 gestrichelt dargestellt sind. Diese Hüllparabeln **7, 8** beschreiben eine innere Grenzlinie und eine äußere Grenzlinie des Retainers **1,** wobei die innere Hüllparabel **7** diejenigen Punkte beinhaltet, die am weitesten innen relativ zur Form des Retainers **1** gelegen sind und die äußere Hüllparabel diejenigen Punkte beinhaltet, die am weitesten außen relativ zur Form des Retainers **1** gelegen sind. Mithin verläuft die äußere Hüllparabel **8** im Wesentlichen durch Hochpunkte der Spitzen **6.** Ein senkrecht zur Hüllparabel **7** gemessener Abstand zwischen selbiger und der äußeren Hüllparabel **8** beträgt im gezeigten Beispiel durchgehend ca. 2 mm. Dieser Wert beschreibt gleichzeitig die oben erwähnte Amplitude der Spitzen **6.** Eine Parabel, die im Wesentlichen durch Hochpunkte der flachen Wellen **5** gelegt würde, hätte einen deutlich geringeren Abstand zur inneren Hüllparabel **7.** Das heißt, dass die Amplitude der Wellen **5** im Vergleich zu den Spitzen **6** klein ist. Dies ist an der Form des gezeigten Retainers **1** gut erkennbar.

Der Retainer **1** ist von dem Material Nitinol gebildet und wurde mittels eines Laserschneidverfahrens aus einem entsprechenden Nitinol-Blech herausgeschnitten. Im Vorfeld zu diesem Verfahrensschritt ist es stets notwendig, die jeweilig nachzubildende Kontur zu stabilisierender Zähne zu erfassen. Dies erfolgt typischerweise mittels des Scans einer Abdruckform, die einem Abdruck des Unter- beziehungsweise Oberkiefer nachgebildet ist, oder mittels eines so genannten "Intraoralscans", der mittels eines Intraoralscanners angefertigt wird. Bei letzterem Verfahren wird die Form der Zähne direkt im Mund des Patienten erfasst. Vorteilhaft ist dabei, dass dieses Verfahren vergleichsweise zügig möglich ist und eine höhere Präzision ermöglicht, als ein Abdruckverfahren.

Das Ergebnis des jeweiligen Scans der Zähne wird anschließend mittels einer CAD-Software bearbeitet und ein dreidimensionales Modell des Retainers **1** erstellt, welches sehr gut an den Scan und folglich an die reale Topografie der jeweiligen Zähne angepasst ist. Auf Basis des Modells wird anschließend der Laser programmiert, mittels dessen der Retainer **1** ausgeschnitten wird. Dieser Verfahrensschritt wird auch als *computer aided manufacturing* (CAM) bezeichnet.

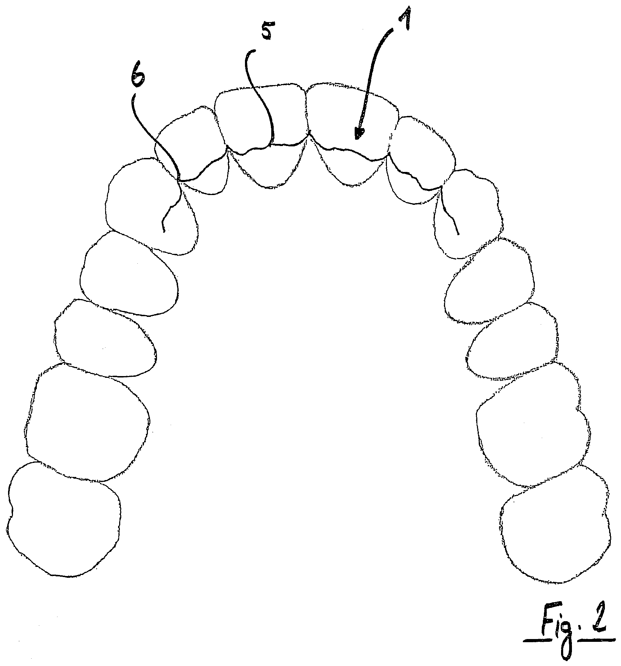

Der Retainer **1** ist in Figur 2 in einem eingesetzten Zustand dargestellt, in dem der Retainer 1 vorerst lose an die Zähne angelegt wird. Der Retainer **1** ist derart ausgeformt, dass ein Abstand zwischen einer Zahnoberfläche, an der der Retainer **1** anliegt und einer Stelle des Retainers **1,** dessen Abstand senkrecht zur Zahnoberfläche gemessen am geringsten ist, maximal 10 µm, das heißt 0,01 mm beträgt. Eine solche Genauigkeit ist bei Retainern gemäß dem Stand der Technik nicht realisierbar. Die sich daraus ergebenden Vorteile sind vorstehend ausführlich erläutert.

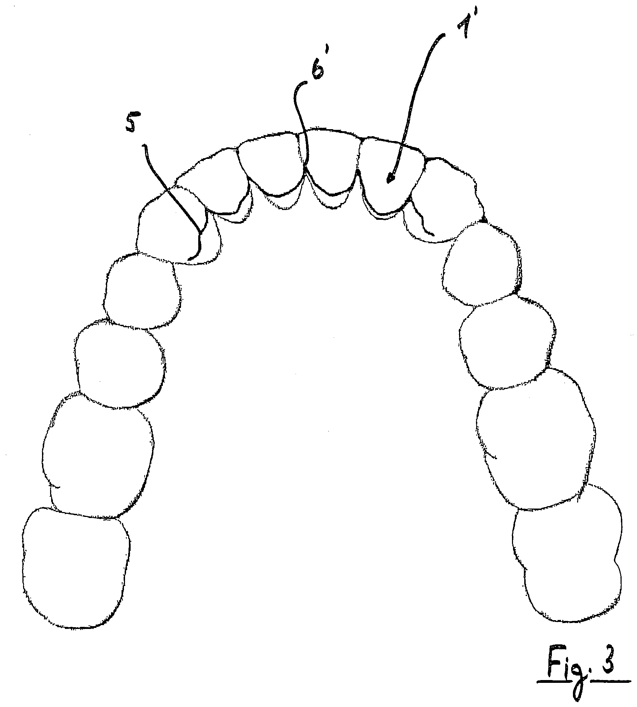

Figur 3 zeigt ein weiteres Beispiel eines erfindungsgemäßen Retainers **1',** wobei der Retainer **1'** für ein Einsatz in einem Unterkiefer geeignet ist. Der Retainer **1'** wird ebenso wie der Retainer **1** mit sechs Zähnen in kraftübertragender Weise verbunden, ist in Figur 3 jedoch lediglich in seinem eingesetzten Zustand dargestellt, das heißt ohne die zur Verbindung notwendigen Verbindungsstellen. Spitzen **6'** des Retainers **1'** ragen dabei derart in Zahnzwischenräume zwischen den Zähnen, dass eine Verschiebung des Retainers **1'** relativ zu den Zähnen zumindest in eine transversale Richtung blockiert ist. Aus der Figur wird deutlich, dass die Amplitude der Spitzen **6'** bei dem Retainer **1'** erheblich größer ausfallen, als dies bei dem Retainer **1** der Fall ist. Dies ergibt sich aus der natürlichen Form der Zähne.

Der Retainer **1** ist in Figur 4 schließlich in einem dreidimensionalen Gittermodell dargestellt. Aus der Darstellung wird deutlich, dass der Retainer **1** einen quadratischen Querschnitt aufweist, wobei eine Kantenlänge des Querschnitts 0,3 mm beträgt. Gleichfalls sind in Figur 4 sowohl eine Vorderseite **9** als auch eine Rückseite **10** des Retainers **1** erkennbar. Diese sind parallel zueinander angeordnet, wobei die Vorderseite **9** in einem eingebauten Zustand des Retainers **1** einer Zahnoberfläche des jeweils anliegenden Zahns zugewandt ist. Senkrecht zu der Vorderseite **9** beziehungsweise der Rückseite **10** sind die Oberseite **2** sowie eine Unterseite **11** des Retainers orientiert.

Die Oberseite **2** und die Unterseite **11** de Retainers **1** liegen jeweils in einer Ebene. Diese Ebenen definieren ein nicht dargestelltes Blech, aus dem der Retainer **1** ursprünglich herausgearbeitet wurde, wobei das Blech eine Dicke von 0,3 mm aufweist. Das heißt, dass ein Bearbeitungswerkzeug (Laser, Wasserstrahl, Erodierdraht etc.) parallel zu der Oberseite **2** des Retainers **1** über dem Blech entsprechend der Kontur des Retainers **1** verfahren wurde, um den Retainer **1** aus dem Blech herauszuarbeiten. Durch diesen Arbeitsschritt sind die Vorderseite **9** und die Rückseite **10** des Retainers **1** entstanden. Diese sind mithin als Bearbeitungsebenen **12** bzw. Ausarbeitungsoberflächen **13** auffassbar, da sie die Ebenen darstellen, die bearbeitet wurden bzw. an denen der Retainer **1** ausgearbeitet wurde. Nach dem Herausarbeiten liegt der Retainer **1** direkt in der dargestellten Form vor und kann ohne weitere Anpassungen an die Zähne des Patienten angelegt werden.

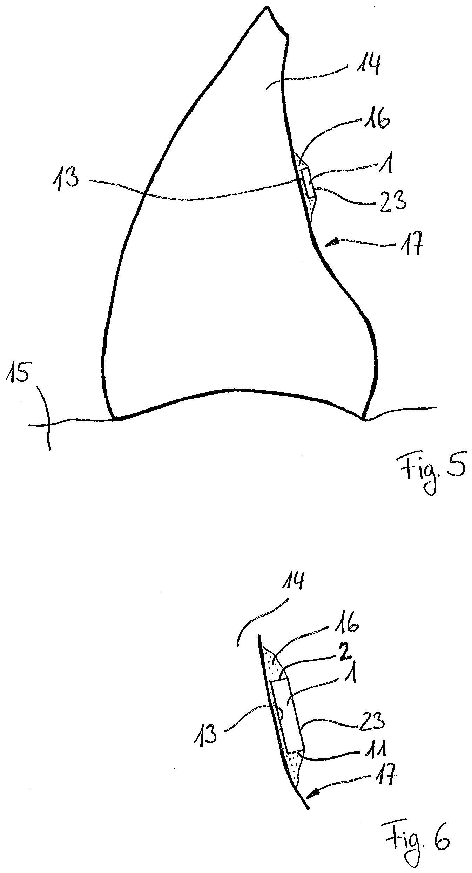

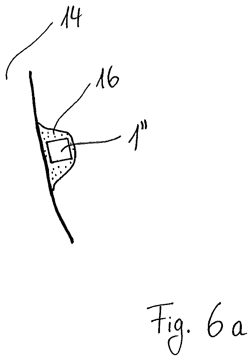

Die Figur 5 zeigt einen Schnitt durch einen Schneidezahn **14,** der mit dem erfindungsgemäßen Retainer **1** aus Figur 1 versehen ist, wobei lediglich der Bereich des Schneidezahns **14** dargestellt ist, der sich oberhalb des Zahnfleischs **15** befindet. Aus Gründen einer besseren Übersichtlichkeit zeigt die Figur 6 eine vergrößerte Darstellung des Retainers **1** aus Figur 5. Der Retainer **1** ist in einem Verbindungsabschnitt - in dem er mit dem Schneidezahn **14** verbunden ist - in ein Verbindungsmaterial **16,** das zuvor auf einer inneren Zahnoberfläche **17** aufgebracht wurde, eingebettet und liegt quasi direkt an dieser Zahnoberfläche **17** an. Die Fläche, mit der der Retainer **1** an der Zahnoberfläche **17** anliegt, entspricht der Ausarbeitungsoberfläche **13** des Retainers **1,** also einer Schnittkante **18,** die bei der Herstellung des Retainers **1** entstanden ist. Die Oberseite **2** des Retainers **1** entspricht einer oberen Blechoberfläche **19** und die Unterseite **11** des Retainers **1** einer unteren Blechoberfläche, wobei obere und untere Blechoberfläche **19** parallel zueinander sind. Die obere und untere Blechoberfläche **19** entspricht der ursprünglichen Die Oberseite **2** und die Unterseite **11** des Retainers **1** verlaufen senkrecht zu der inneren Zahnoberfläche **17.**

In der Figur 6a ist eine alternativ ausgebildeter Retainer **1"** dargestellt, der einen quadratischen Querschnitt besitzt und der in seinem Verbindungsabschnitt so mit dem Verbindungsmaterial **16** an dem Schneidezahn **14** angebracht ist, dass er vollständig von dem Verbindungsmaterial **16** umhüllt ist.

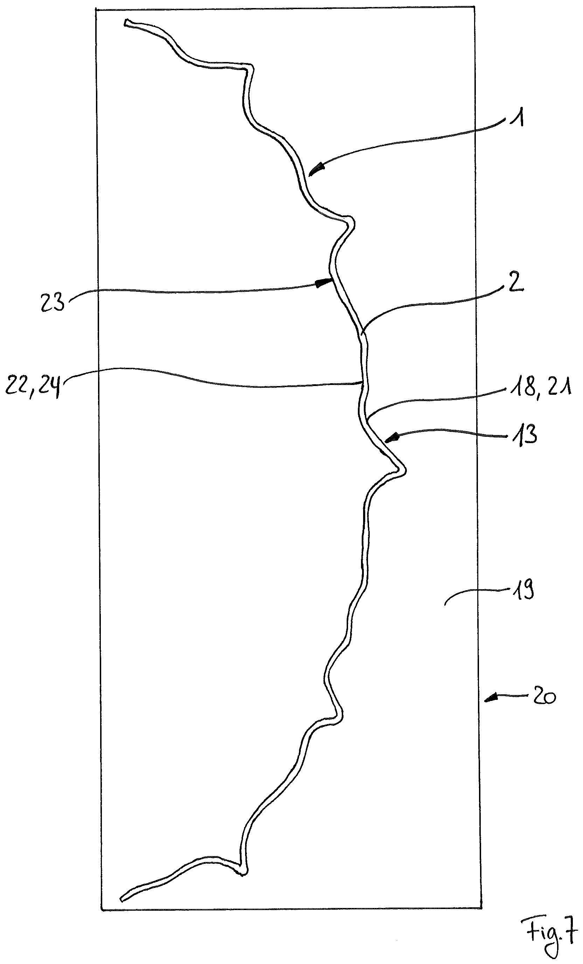

Schließlich zeigt die Figur 7 eine Draufsicht auf ein Nitinol-Blech **20,** wobei der Vorgang des Herausarbeitens des erfindungsgemäßen Retainers **1** aus Figur 1 gerade beendet wurde und sich der fertig ausgeschnittene Retainer **1** noch in dem Nitinol-Blech **20** befindet. Die in der Zeichenebene befindliche Fläche des Nitinol-Blechs **20** sowie des Retainers **1** entspricht der oberen Nitinol-Blechoberfläche **19** beziehungsweise der Oberseite **2** des Retainers **1.** Die Schnittkante **18** des Retainers **1,** von der in der Figur 7 lediglich eine Linie **21** erkennbar ist, verläuft senkrecht zu der Zeichenebene. Sie entspricht der Ausarbeitungsoberfläche **13** des Retainers **1,** die an der inneren Zahnoberfläche **17** zu liegen kommt. Eine parallel zu der Schnittkante **18** verlaufende Schnittkante **22,** die abermals in der Figur 7 nur als Linie **24** erkennbar ist, ist ebenfalls als Ausarbeitungsoberfläche **23** aufzufassen, wobei diese im eingesetzten Zustand der inneren Zahnoberfläche **17** abgewandt ist.

### Bezugszeichenliste

- 1, 1', 1": Retainer
- 2: Oberseite
- 3: Bogen
- 4: Ausformung
- 5: Welle
- 6, 6': Spitze
- 7: Hüllparabel
- 8: Hüllparabel
- 9: Vorderseite
- 10: Rückseite
- 11: Unterseite
- 12: Bearbeitungsebene
- 13: Ausarbeitungsoberfläche
- 14: Schneidezahn
- 15: Zahnfleisch
- 16: Verbindungsmaterial
- 17: innere Zahnoberfläche
- 18: Schnittkante
- 19: obere Blechoberfläche
- 20: Nitinol-Blech
- 21: Linie
- 22: Schnittkante
- 23: Ausarbeitungsoberlfäche
- 24: Linie

## Patentansprüche

1. Retainer (1, 1'), der vorgesehen ist, mit einer Mehrzahl von Zähnen zusammenzuwirken, geeignet für die Stabilisierung der Zähne, umfassend mindestens einen lang gestreckten Bogen (3), wobei der Bogen (3) global eine gekrümmte, einer natürlichen Krümmung eines Unterkiefers oder eines Oberkiefers folgende Form aufweist und lokal an eine Oberflächenkontur eines im eingebauten Zustand des Retainers (1,1') jeweilig anliegenden Zahns individuell angepasst ist, wobei der Retainer (1, 1') derart aus einem zwei parallel zueinander angeordnete Oberflächen (19) aufweisenden plattenförmigen Teil herausgearbeitet ist, dass er nach dem Herausarbeiten direkt seine schlussendliche Form aufweist, **dadurch gekennzeichnet, dass** der Retainer (1, 1') aus einer Nickel-Titan-Legierung besteht und eine Ausarbeitungsoberfläche (13) des Retainers (1, 1') in dessen eingebautem Zustand einer Zahnoberfläche (17) zugewandt ist, an der der Retainer (1, 1') anliegt, und eine Oberseite (2) oder eine Unterseite (11) des Retainers (1, 1') einer der ursprünglichen Oberflächen (19) des plattenförmigen Teils entspricht.

2. Retainer (1, 1') nach Anspruch 1, wobei der Retainer (1, 1') abschnittsweise in Verbindungsabschnitten mittels eines Verbindungsmaterials mit den jeweilig anliegenden Zähnen in Kraft übertragender Weise verbindbar ist, vorzugsweise in ein an dem jeweiligen Zahn haftendes Verbindungsmaterial einbettbar ist, **dadurch gekennzeichnet, dass** in einem verbundenen Zustand in jedem der Verbindungsabschnitte ein maximaler Abstand zwischen einer jeweiligen Zahnoberfläche und einer Stelle des Retainers (1, 1'), die senkrecht zu der jeweiligen Zahnoberfläche gemessen den geringsten Abstand zu ebendieser Zahnoberfläche aufweist, maximal 0,1 mm beträgt.

3. Retainer (1, 1') nach Anspruch 1 oder 2, **dadurch gekennzeichnet, dass** der Retainer (1, 1') lokal derart ausgeformt ist, dass er in eingebautem Zustand in mindestens einen zwischen zwei benachbarten Zähnen befindlichen Zahnzwischenraum zumindest teilweise hineinragt, so dass eine in Längsrichtung des Retainers (1, 1') gerichtete Relativbewegung zwischen dem Retainer (1, 1') und den Zähnen selbst dann blockiert ist, wenn der Retainer (1, 1') in einem unverbundenen Zustand an den Zähnen anliegt.

4. Retainer (1, 1') nach einem der Ansprüche 1 bis 3, **dadurch gekennzeichnet, dass** der Bogen lokal einen Krümmungsradius von 1,0 mm oder weniger, vorzugsweise 0,5 mm oder weniger, weiter vorzugsweise 0,2 mm oder weniger, aufweist.

5. Retainer (1, 1') nach einem der Ansprüche 1 bis 4, **dadurch gekennzeichnet, dass** der Bogen (3) einen parallelogrammförmigen, vorzugsweise einen rechteckigen, Querschnitt aufweist, wobei Kantenlängen des Querschnitts maximal 0,7 mm, vorzugsweise maximal 0,5 mm, weiter vorzugsweise maximal 0,3 mm, betragen.

6. Retainer (1, 1') nach einem der Ansprüche 1 bis 5, **dadurch gekennzeichnet, dass** der Retainer einstückig ausgeführt ist.

7. Retainer (1, 1') nach einem der Ansprüche 1 bis 6, wobei der Retainer (1, 1') in dessen Draufsicht betrachtet von einer inneren Hüllparabel (7) und einer äußeren Hüllparabel (8) einfassbar ist, **dadurch gekennzeichnet, dass** lokal im Bereich eines Zahnzwischenraums ein maximaler, senkrecht zur inneren Hüllparabel (7) gemessener Abstand zwischen der inneren Hüllparabel (7) und der äußeren Hüllparabel (8) mindestens 1,0 mm, vorzugsweise 1,5 mm, weiter vorzugsweise 2,0 mm, beträgt.

8. Retainer nach einem der Ansprüche 1 bis 7, **gekennzeichnet durch** eine zumindest teilweise aufgeraute Oberfläche, wobei vorzugsweise sämtliche in Längsrichtung des Retainers verlaufenden Oberflächen aufgeraut sind.

9. Retainer nach einem der Ansprüche 1 bis 8, **dadurch gekennzeichnet, dass** eine Oberfläche des Retainers zumindest teilweise mittels einer Elektropolitur oder einer Plasmapolitur behandelt ist.

10. Retainer nach einem der Ansprüche 1 bis 9, **dadurch gekennzeichnet, dass** die Nickel-Titan-Legierung eine AF-Temperatur zwischen 25°C und 35°C, vorzugsweise zwischen 27°C und 33°C, weiter vorzugsweise zwischen 29°C und 31°C, aufweist.

11. Verfahren zur Herstellung eines Retainers (1, 1') gemäß Anspruch 1, aufweisend die folgenden Verfahrensschritte:
a) Eine Kontur individuell zu stabilisierender Zähne wird erfasst.
b) Der Retainer (1, 1') wird aus einem Blech herausgearbeitet, das von Metall gebildet ist,
**gekennzeichnet durch** die folgenden Verfahrensschritte:
c) Die erfasste Kontur der Zähne wird in ein Modell überführt und der Retainer (1, 1') anhand des Modells entworfen.
d) Der entworfene Retainer (1, 1') wird auf Basis des Modells mittels eines computergesteuerten Verfahrens aus dem Blech, das aus einer Nickel-Titan-Legierung besteht, herausgearbeitet, sodass der Retainer (1, 1') nach dem Herausarbeiten aus dem Blech direkt seine schlussendliche Form aufweist, wobei eine Ausarbeitungsoberfläche des fertigen Retainers (1, 1') in dessen eingebautem Zustand einer Zahnoberfläche zugewandt ist, an der der Retainer (1, 1') anliegt, und eine Oberseite oder eine Unterseite des Retainers (1, 1') einer der ursprünglichen Oberflächen (19) des Blechs entspricht.

12. Verfahren nach Anspruch 11, **dadurch gekennzeichnet, dass** der Retainer (1, 1') mittels Laserschneidens oder mittels Drahterosion aus dem Blech herausgeschnitten wird.

13. Verfahren nach Anspruch 11 oder 12, **dadurch gekennzeichnet, dass** die Kontur der zu stabilisierenden Zähne intraoral erfasst wird.

14. Verfahren nach einem der Ansprüche 11 bis 13, **dadurch gekennzeichnet, dass** das Blech, aus dem der Retainer (1, 1') herausgearbeitet wird, um mindestens eine Krümmungsachse gekrümmt ist, wobei die Krümmungsachse in einem ungekrümmten Zustand des Blechs in einer zu dem Blech parallelen Ebene verläuft.

15. Verfahren nach einem der Ansprüche 11 bis 14, **dadurch gekennzeichnet, dass** der Retainer, nachdem er aus dem Blech herausgearbeitet wurde, elektropoliert oder plasmapoliert wird, wodurch Kanten gerundet werden.

## Claims

1. A retainer (1, 1'), which is provided for working with a plurality of teeth and is suitable for stabilization of teeth, comprising at least one elongated arc (3), wherein the arc (3) has a curved shape globally, which follows the natural curvature of the lower jaw or upper jaw and is adjusted individually and locally to the surface contour of a tooth, which is adjacent in the installed condition of the retainer (1, 1'), wherein the retainer (1, 1') is formed from a plate-shaped part having two surfaces (19) arranged parallel to one another in such a way that after the retainer has carved out, it has its final shape immediately,
**characterized in that** the retainer (1, 1') consists of a nickel-titanium alloy, and the shaped surface (13) of the retainer (1, 1') is facing the surface of a tooth (17) with which the retainer (1, 1') is in contact in the installed condition, and a top side (2) or a bottom side (11) of the retainer (1, 1') corresponds to one of the original surfaces (19) of the plate-shaped part.

2. The retainer (1, 1') according to claim 1, wherein the retainer (1, 1') can be connected to the respective adjacent teeth in a forced-transmitting manner in connecting sections by means of a bonding material in some sections, preferably being embeddable in a bonding material that adheres to the respective tooth, **characterized in that** the maximum distance between the respective tooth surface and a spot on the retainer (1, 1'), which is perpendicular to the respective tooth surface and is the smallest distance of max. 0.1 mm from precisely this tooth surface, measured at a right angle to the respective tooth surface.

3. The retainer (1, 1') according to claim 1 or 2, **characterized in that** the retainer (1, 1') is shaped locally so that, in the installed condition, it protrudes at least partially into at least one dental interspace between two neighboring teeth, so that a relative movement between the retainer (1, 1') and the teeth, directed in the longitudinal direction of the retainer (1, 1'), is blocked if the retainer (1, 1') is in contact with the teeth in an unbonded condition.

4. The retainer (1, 1') according to any one of claims 1 to 3, **characterized in that** the arc has a curvature radius of 1.0 mm or less locally, preferably 0.5 mm or less, more preferably 0.2 mm or less.

5. The retainer (1, 1') according to any one of claims 1 to 4, **characterized in that** the arc (3) has a cross-section in the shape of a parallelogram, preferably a rectangle, with edge lengths of the cross section amounting to max. 0.7 mm, preferably max. 0.5 mm, more preferably max. 0.3 mm.

6. The retainer (1, 1') according to any one of claims 1 to 5, **characterized in that** the retainer is embodied in one piece.

7. The retainer (1, 1') according to any one of claims 1 to 6, wherein the retainer (1, 1'), as seen in a view from above, can be framed by an inner enclosing parabola (7) and an outer enclosing parabola (8), **characterized in that** the maximum distance, measured perpendicular to the inner enclosing parabola (7), between the inner enclosing parabola (7) and the outer enclosing parabola (8) amounts to at least 1.0 mm locally, preferably 1.5 mm, more preferably 2.0 mm, in the area of an interdental space.

8. The retainer according to any one of claims 1 to 7, **characterized by** a surface that has been at least partially roughened, wherein all surfaces running in the longitudinal direction of the retainer have preferably been roughened.

9. The retainer according to any one of claims 1 to 8, **characterized in that** one surface of the retainer is treated at least partially by means of an electropolish or a plasma polish.

10. The retainer according to any one of claims 1 to 9, **characterized in that** the nickel-titanium alloy has an AF temperature between 25 °C and 35 °C, preferably between 27 °C and 33 °C, more preferably between 29 °C and 31 °C.

11. A method for producing a retainer (1, 1') according to claim 1, comprising the following method steps:
a) a contour of teeth to be stabilized individually is acquired;
b) the retainer (1, 1') is cut from a sheet formed from metal,
**characterized by** the following method steps:
c) the contour acquired for the teeth is converted into a model, and the retainer (1, 1') is drafted on the basis of the model;
d) the retainer (1, 1') designed is cut from the sheet metal consisting of a nickel-titanium alloy on the basis of the model by using a computer-controlled method, so that the retainer (1, 1') has its final form immediately after being cut from the sheet metal, such that the cut surface of the finished retainer (1, 1') in its installed condition is facing a tooth surface with which the retainer (1, 1') is in contact, and a top side or a bottom side of the retainer (1, 1') corresponds to one of the original surfaces (19) of the sheet metal.

12. The method according to claim 11, **characterized in that** the retainer (1, 1') is cut out of the sheet metal by laser cutting or by wire erosion.

13. The method according to claim 11 or 12, **characterized in that** the contour of the teeth to be stabilized is captured intraorally.

14. The method according to any one of claims 11 to 13, **characterized in that** the sheet metal of which the retainer (1, 1') is cut is curved about at least one axis of curvature, such that the axis of curvature runs in a plane parallel to the sheet metal in an uncurved state of the sheet metal.

15. The method according to any one of claims 11 to 14, **characterized in that** the retainer, after being cut out of the sheet metal, is electropolished or plasma-polished, so that the edges are rounded.

## Revendications

1. Appareil de contention (1, 1') qui est prévu pour coopérer avec une pluralité de dents, approprié pour la stabilisation des dents, comprenant au moins un arc (3) étiré en longueur, dans lequel l'arc (3) présente globalement une forme incurvée, suivant une courbure naturelle d'une mâchoire inférieure ou d'une mâchoire supérieure et est adapté individuellement localement à un contour de surface d'une dent présente respectivement dans l'état monté de l'appareil de contention (1, 1'), dans lequel l'appareil de contention (1, 1') est ainsi usiné à partir d'une partie en forme de plaque présentant deux surfaces (19) disposées parallèles entre elles qu'il présente directement sa forme définitive après l'usinage,
**caractérisé en ce que** l'appareil de contention (1, 1') est composé d'un alliage nickel-titane, et une surface finalisée (13) de l'appareil de contention (1, 1'), dans son état monté, est tournée vers une surface de dent (17) contre laquelle l'appareil de contention (1, 1') repose, et une face supérieure (2) ou une face inférieure (11) de l'appareil de contention (1, 1') correspond à une des surfaces d'origine (19) de la partie en forme de plaque.

2. Appareil de contention (1, 1'), selon la revendication 1, dans lequel l'appareil de contention (1, 1') peut être relié par tronçons dans des tronçons de liaison au moyen d'un matériau de liaison, avec les dents respectivement présentes dans une manière de transfert de force, peut être de préférence enchâssé dans un matériau de liaison adhérent à la dent respective, **caractérisé en ce que** dans un état lié dans chacun des tronçons de liaison, un écart maximal entre une surface de dent respective et un point de l'appareil de contention (1, 1') qui présente l'écart le plus faible par rapport à cette même surface de dent mesuré verticalement à la surface de dent respective, fait au maximum 0,1 mm.

3. Appareil de contention (1, 1'), selon la revendication 1 ou 2, **caractérisé en ce que** l'appareil de contention (1, 1') est ainsi déformé localement que dans l'état monté, il fait saillie au moins partiellement dans au moins un espace interdentaire se trouvant entre deux dents voisines de sorte qu'un mouvement relatif dirigé dans le sens longitudinal de l'appareil de contention (1, 1') est bloqué entre l'appareil de contention (1, 1') et les dents elles-mêmes lorsque l'appareil de contention (1, 1') repose contre les dents dans un état non lié.

4. Appareil de contention (1, 1'), selon l'une des revendications 1 à 3, **caractérisé en ce que** l'arc présente localement un rayon de courbure de 1 mm ou moins, de préférence de 0,5 mm ou moins, plus encore de préférence de 0,2 mm ou moins.

5. Appareil de contention (1, 1'), selon l'une des revendications 1 à 4, **caractérisé en ce que** l'arc (3) présente une section en forme de parallélogramme, de préférence rectangulaire, dans lequel les longueurs des arêtes de la section font au maximum 0,7 mm, de préférence au maximum 0,5 mm, plus encore de préférence au maximum 0,3 mm.

6. Appareil de contention (1, 1'), selon l'une des revendications 1 à 5, **caractérisé en ce que** l'appareil de contention est conçu d'une seule pièce.

7. Appareil de contention (1, 1'), selon l'une des revendications 1 à 6, dans lequel l'appareil de contention (1, 1'), dans sa vue de dessus, peut être bordé par une parabole d'enveloppe intérieure (7) et une parabole d'enveloppe extérieure (8), **caractérisé en ce que** localement au niveau d'un espace interdentaire, un écart maximal mesuré verticalement à la parabole d'enveloppe intérieure (7), entre la parabole d'enveloppe intérieure (7) et la parabole d'enveloppe extérieure (8), fait au moins 1 mm, de préférence 1,5 mm, plus encore de préférence 2 mm.

8. Appareil de contention selon l'une des revendications 1 à 7, **caractérisé par** une surface au moins partiellement rugueuse, dans lequel de préférence l'ensemble des surfaces dans le sens longitudinal de l'appareil de contention sont rugueuses.

9. Appareil de contention selon l'une des revendications 1 à 8, **caractérisé en ce qu'**une surface de l'appareil de contention est au moins traitée partiellement par électro-polissage ou polissage au plasma.

10. Appareil de contention selon l'une des revendications 1 à 9, **caractérisé en ce que** l'alliage nickel-titane présente une température Af entre 25 °C et 35 °C, de préférence entre 27 °C et 33 °C, plus encore de préférence entre 29 °C et 31 °C.

11. Procédé de fabrication d'un appareil de contention (1, 1') selon la revendication 1, présentant les étapes de procédé suivantes :
a) un contour individuel aux dents à stabiliser est pris,
b) l'appareil de contention (1, 1') est usiné à partir d'une tôle qui est en métal,
**caractérisé par** les étapes de procédé suivantes :
c) le contour pris des dents est transféré dans un modèle et l'appareil de contention (1, 1') est projeté à l'aide du modèle,
d) l'appareil de contention (1, 1') projeté est usiné à partir du modèle au moyen d'un procédé par ordinateur à partir de la tôle qui est en alliage de nickel-titane, de sorte que l'appareil de contention (1, 1'), après l'usinage à partir de la tôle présente directement sa forme définitive, dans lequel une surface finalisée de l'appareil de contention (1, 1') fini, dans son état monté, est tournée vers une surface de dent contre laquelle l'appareil de contention (1, 1') repose, et une face supérieure ou une face inférieure de l'appareil de contention (1, 1') correspond à une des surfaces d'origine (19) de la tôle.

12. Procédé selon la revendication 11, **caractérisé en ce que** l'appareil de contention (1, 1') est usiné par découpe laser ou par étincelage par fil à partir de la tôle.

13. Procédé selon la revendication 11 ou 12, **caractérisé en ce que** le contour des dents à stabiliser est pris de manière intra-orale.

14. Procédé selon l'une des revendications 11 à 13, **caractérisé en ce que** la tôle à partir de laquelle l'appareil de contention (1, 1') est usiné, est courbée sur au moins un axe de courbure, dans lequel l'axe de courbure passe, dans un état non courbé de la tôle, dans un plan parallèle à la tôle.

15. Procédé selon l'une des revendications 11 à 14, **caractérisé en ce que** l'appareil de contention, après qu'il a été usiné à partir de la tôle, est poli par électrolyse ou poli au plasma, ce par quoi les arêtes sont arrondies.
